# EUROPEAN PATENT SPECIFICATION

(11) **EP 2 889 236 B1**
(45) Date of publication and mention of the grant of the patent: **17.07.2019**
(21) Application number: 14004100.5
(22) Date of filing: 04.12.2014
(51) Int. Cl.: B65G 21/00, G01N 35/04

(54) **Sample transport apparatus**
Probentransportvorrichtung
Appareil de transport d'échantillon

(30) Priority: 20.12.2013 JP 2013264590
(43) Date of publication of application: 01.07.2015
(73) Proprietor: Hitachi High-Technologies Corporation, Minato-ku Tokyo 105-8717 (JP)
(72) Inventor: Oonuma, Mitsuru, Tokyo, 100-8280 (JP); Sato, Yoko, Tokyo, 100-8280 (JP); Noda, Hiroyuki, Tokyo, 100-8280 (JP); Azuma, Shinji, Tokyo, 105-8717 (JP); Tsujimura, Naoto, Tokyo, 105-8717 (JP)
(74) Representative: Strehl Schübel-Hopf & Partner

(56) References cited:
- EP-A1- 1 524 210
- EP-A1- 2 485 058
- WO-A2-2012/012779
- JP-A- 2003 293 494
- US-B1- 6 827 902

## Description

### BACKGROUND

### Technical Field

The present invention relates to a sample transport apparatus suited to transporting samples between a plurality of inspection apparatuses.

### Background Art

In recent years, a variety of types of sample inspection apparatuses have been introduced into hospitals and the like to promote automation of sample inspection. Examples of sample inspection apparatuses include sample processing apparatuses, biochemical analyzers, immunoassay apparatuses, and sample accommodating apparatuses. In addition, the sample inspection apparatuses include not only single-module apparatuses but also apparatuses that are obtained by combining a plurality of modules.

### RELATED ART DOCUMENTS

### Patent Documents

Patent Document 1: International Publication No. WO2011/040197A
Patent Document 2: JP 2003-293494 A

US 6 827 902 B1 discloses a sample transport apparatus with the features in the pre-characterizing portion of claim 1. JP 2003 293494 A discloses a panel connecting structure for concealing internal wiring from the outside. A multi-stage automated specimen testing and transport system, related to the present invention is presented in EP 2 485 058 A1.

### SUMMARY

The most part of the outer periphery of a sample transport apparatus, excluding an opening portion used for transporting samples, is surrounded by a housing. Therefore, in maintenance of the sample transport apparatus, the housing should be removed irrespective of what operation is to be performed. Thus, many hours would be required for the operation. In addition, in the existing sample transport apparatuses, accommodation of component parts into housings is prioritized, so that zoning in which maintenance should be taken into consideration can be insufficient. Therefore, when wires accommodated in the housing are arranged in a complex manner, it will take a long time to reach a desired wire.

In order to solve the aforementioned problem, the sample transport apparatus as defined in independent claim 1 is suggested. Further advantageous features of the apparatus are set out in the dependent claim.

According to the present invention, a sample transport apparatus that can accommodate component parts in a compact manner and only requires easy maintenance can be implemented. Other problems, structures, and advantages will become apparent from the following description of embodiments.

### BRIEF DESCRIPTION OF THE DRAWINGS

FIG. 1 is a perspective view showing the appearance structure of a sample inspection system.
FIG. 2 is a view showing exemplary assembly of a sample transport apparatus.
FIG. 3 is an exploded perspective view showing an exemplary structure of a sample transport apparatus without a branch path.
FIG. 4 is a view showing an exemplary cross-sectional structure cut along a line perpendicular to a long-side direction (Example 1).
FIG. 5 is a view showing an exemplary cross-sectional structure cut along a line perpendicular to a long-side direction (Example 2, not being an embodiment of the present invention).
FIG. 6 is a plan view showing an exemplary structure of a sample transport apparatus for junction.

### DETAILED DESCRIPTION OF THE EMBODIMENTS

Hereinafter, embodiments of the present invention will be described with reference to the drawings. In addition, in all drawings used for the description, identical members are, in principle, denoted by identical reference numbers, and repeated description thereof will be omitted.

### [Exemplary Appearance of Sample Inspection System]

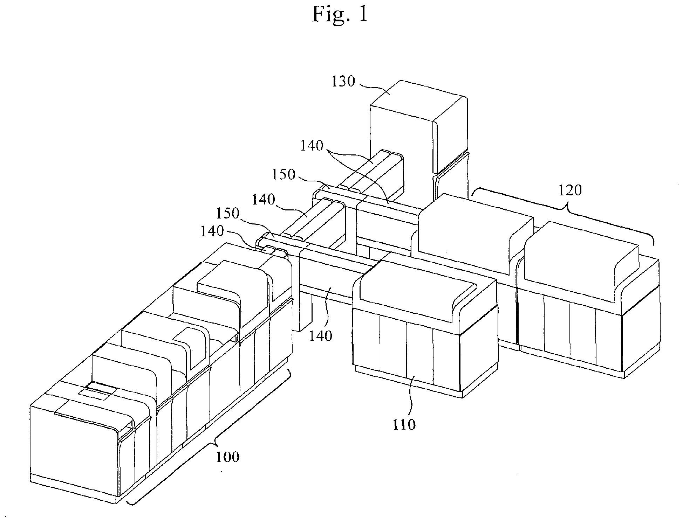

FIG. 1 shows an exemplary appearance structure of a sample inspection system. The sample inspection system herein is an exemplary system that has a plurality of sample inspection apparatuses connected together with dedicated transport channels (i.e., sample transport apparatuses). The scale of the sample inspection system and the combination of sample inspection apparatuses that constitute the system may differ in accordance with an installation place or needs of customers. In this specification, a sample refers to a target to be inspected that is egested or taken from a human body, and includes, for example, blood, urine, feces, tissues, and cells.

The sample inspection system shown in FIG. 1 includes a sample processing apparatus 100, a sample analyzer (i.e., biochemical analyzer) 110, a sample analyzer (i.e., an apparatus obtained by connecting a biochemical analyzer and an immunoassay apparatus) 120, a sample accommodating apparatus (i.e., refrigerator) 130, five sample transport apparatuses 140 according to the present invention, and two sample transport apparatuses 150 for connection not covered by the present invention.

The inspection processing apparatus 100 in this embodiment includes, for example, a loading module for installing a loaded sample onto an inspection rack (hereinafter referred to as a "sample holder"), a storage module for taking out the sample from the sample holder, a processing module (e.g., an centrifugal module, an uncapping module, a dispensing module, a barcode sticking module, or a sample classification module) for executing a predetermined process on the sample and/or the sample holder, a rack stocker for supplying and collecting sample holders, and a control unit (not shown). The sample processing apparatus 100 has extended main transport lines, each of which transports sample holders each holding at least one sample in the long-side direction such that the main transport line crosses the module.

In this embodiment, main transport lines are arranged in two stages including upper and lower stages. In each stage, two main transport lines that transport samples in opposite directions are arranged in parallel. It should be noted that the main transport lines on the lower stage side are adapted to transport empty sample holders from which samples have been taken out. Needless to say, the main transport lines may also be arranged in a single stage or three or more stages. The specifications, such as the dimensions, mounting positions, and mounting heights of the main transport lines are made common to all apparatuses that constitute the sample inspection system (in the case of FIG. 1, the sample analyzer 110, the sample analyzer 120, the sample accommodating apparatus 130, the sample transport apparatuses 140, and the sample transport apparatuses 150 for junction).

It should be noted that the sample analyzer 110 is a stand-alone biochemical analyzer; the sample analyzer 120 is an apparatus obtained by connecting a biochemical apparatus and an immunoassay apparatus in series in the transport direction; and the sample accommodating apparatus 130 is a large-tower-type accommodating apparatus used for refrigeration storage of samples.

The sample transport apparatus 140 is a specialized transport apparatus for transporting samples and/or sample holders in the long-side direction, and basically has no other functional portions than the transport function. The sample transport apparatus 140 includes in its housing the aforementioned main transport lines, a drive mechanism (which includes a belt conveyor and its driving motor) for moving sample holders along the main transport lines, a power supply unit that supplies power to at least the motor and the like of the drive mechanism, and wires such as power lines and control signal lines.

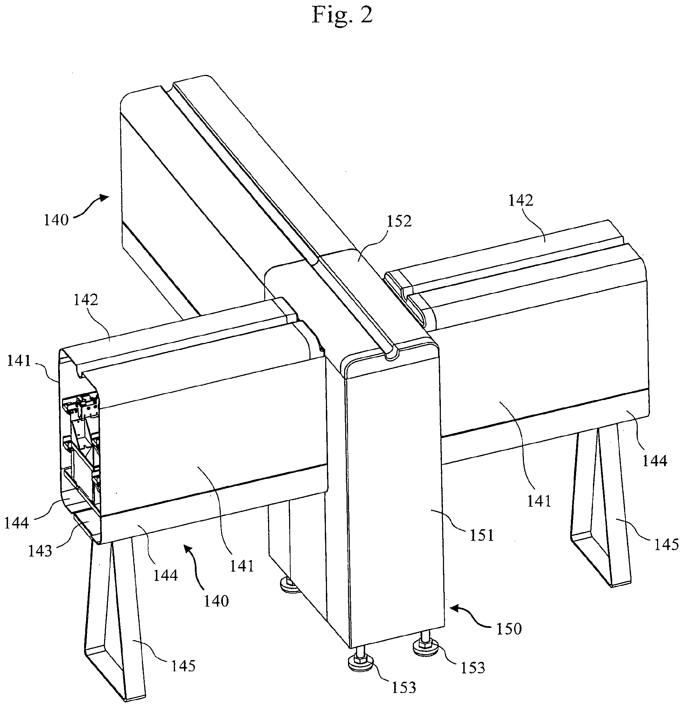

FIG. 2 shows an exemplary appearance of the sample transport apparatus 140. In FIG. 2, the sample transport apparatus 140 is connected in a T-shape via the sample transport apparatus 150 for junction. The sample transport apparatus 140 shown in FIG. 2 accommodates transport lines that extend in the long-side direction, a pair of right and left housings (panels) 141 forming the long-side side faces, a transport line cover 142 that covers an opening portion at the top of the housings, a base substrate 143 that supports the housings 141 and an internal structure (not shown), openable/closable doors 144 forming the long-side side faces of the sample transport apparatus 140 together with the housings 141, and legs 145 attached to the bottom of the base substrate 143.

The sample transport apparatus 140 is based on the premise that it will be connected to another sample transport apparatus or a sample inspection apparatus, and thus has open opposite ends in the long-side direction. That is, the sample transport apparatus 140 has a cylindrical appearance whose cross section is approximately rectangular in shape. In this embodiment, one of two types of units that have common component parts other than the transport line length (that is, the length of the housing in the long-side direction) is used for the sample transport apparatus 140. In this embodiment, the transport line length is supposed to be 600 mm or 900 mm.

The sample transport apparatus 150 for junction is a transport-only apparatus not covered by the present invention and that can connect to the sample transport apparatus 140 and/or the sample inspection apparatus in a plurality of directions. Therefore, as with the sample transport apparatus 140, the sample transport apparatus 150 for junction basically has no other functions than the transport function. Thus, the sample transport apparatus 150 for junction includes main transport lines, a drive mechanism (which includes a belt conveyor and its driving motor) that moves sample holders along the main transport lines, a power supply unit that supplies power to at least the motor and the like of the drive mechanism, and wires such as power lines and control signal lines.

However, the sample transport apparatus 150 for junction has, in addition to the transport mechanism for taking in and out sample holders to/from the sample transport apparatus 140 or a sample inspection apparatus, which is connected in series with the sample transport apparatus 150 for junction in the long-side direction, a transport mechanism for taking in and out sample holders to/from the sample transport apparatus 140 connected at a predetermined mounting angle, sub-transport lines for transferring sample holders from one of the pair of main transport lines arranged in parallel to the other main transport line, a stopper used to individually switch the transport directions of sample holders at a plurality of branch points in the transport direction, and a direction changing mechanism.

The sample transport apparatus 150 for junction comes in various shapes, for example, those for T-shape connection, L-shape connection, and Y-shape connection. The sample transport apparatus 150 for junction shown in FIG. 2 is the apparatus for T-shape connection. It should be noted that when transport to one of the sample transport apparatuses 140 that extend right and left from the long-side side faces of the sample transport apparatus 150 for junction is not necessary, the sample transport apparatus 150 for junction for L-shape connection is used. Needless to say, the sample transport apparatus 150 for junction for T-shape connection can also be used as a sample transport apparatus 150 for junction for L-shape connection as long as one of the two opening portions formed on the long-side side faces of the sample transport apparatus 150 for junction for T-shape connection is covered.

The sample transport apparatus 150 for junction includes a rectangular housing 151 for accommodating main-transport lines that extend in the long-side direction and sub-transport lines that extend in the short-side direction, and a transport line cover 152 that covers an opening portion at the top of the housing. In FIG. 2, the housing 151 of the sample transport apparatus 150 for junction is a box-shaped housing whose bottom face is near a floor surface (i.e., installation surface), and has four height adjustment legs 153 at the bottom face.

### [Exemplary Structure of Sample Transport Apparatus]

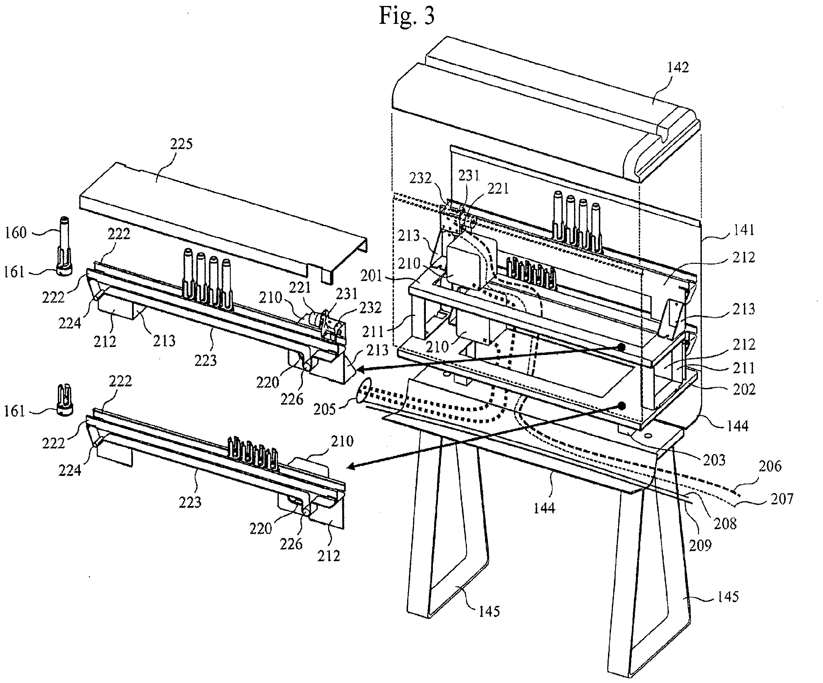

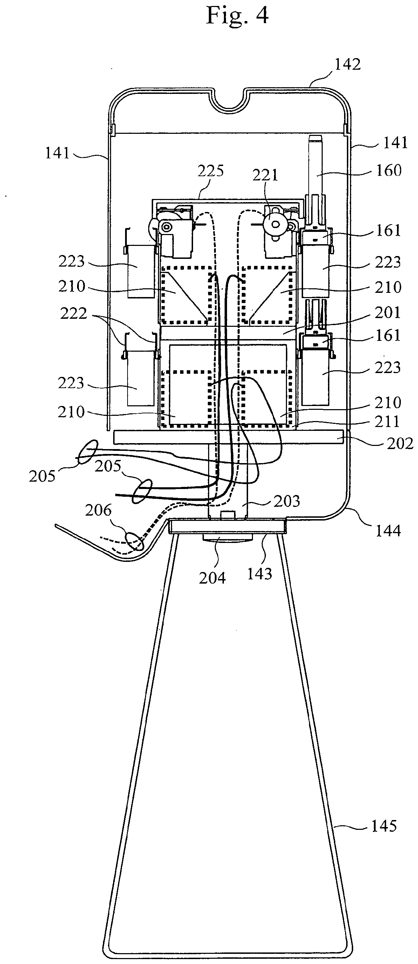

An exemplary internal structure of the sample transport apparatus 140 will be described with reference to FIGS. 3 to 4. FIG. 3 is an exploded perspective view of the sample transport apparatus 140, and FIG. 4 is a cross-sectional view of the sample transport apparatus 140 cut along a line perpendicular to the transport direction. In this embodiment, the housing of the sample transport apparatus 140 has arranged therein two transport line stages each including two (right and left) transport lines. Samples are transported on the right-hand side. In this embodiment, the transport line stage on the upper stage side is used only for transporting sample holders 161 holding samples 160 (e.g., test tubes that accommodate sample solutions), while the transport line stage on the lower stage side is used only for transporting sample holders 161 not having the samples 160 mounted thereon (i.e., empty). In FIG. 3, the transport line stages are shown with front transport lines of the two (upper and lower) stages taken out from the housing. It should be noted that a member on the flat plate depicted at the top of the two (upper and lower) stages of transport lines is a right-left connecting plate 225 used to prevent dust and connect transport lines.

The number of transport line stages may be either one or three or more. When the number of transport line stages is three or more, a plurality of transport line stages for use in transporting samples 160 may be provided, or a plurality of transport line stages for use in transporting empty sample holders 161 may also be provided. In this embodiment, a mechanism for transferring the sample holders 161 between the upper and lower transport line stages (i.e., a mechanism for transferring the sample holders 161 from the upper stage side to the lower stage side and/or from the lower stage side to the upper stage side) is mounted on the sample processing apparatus 100 (FIG. 1), for example. Such a mechanism is common, and an example thereof is described in, for example, Patent Literature 1.

In this embodiment, as the two transport line stages are provided, two shelf boards (i.e., an upper-stage shelf board 201 and a lower-stage shelf board 202) are arranged in the housing. The length of the long side of each of the two shelf boards is substantially equal to the length of the housing 141 in the long-side direction. The center of each of the upper-stage shelf board 201 and the lower-stage shelf board 202 in a rectangular shape is provided with an opening to pass wire cables and the like therethrough. The opening has a size that is necessary to pass control lines and power lines accommodated in the housing therethrough. Although FIG. 3 shows an example in which one opening is provided, the number of openings may be more than one.

The lower-stage shelf board 202 is attached to the base substrate 143 via posts 203. In this embodiment, a pair of posts 203 are arranged at opposite ends in the long-side direction. A height adjustment mechanism 204 formed of a height adjustment screw or the like is arranged at the attachment portion between the posts 203 and the base substrate 143. An operating portion of the height adjustment mechanism 204 is provided on the bottom face side of the base substrate 143. Therefore, an operator is able to operate the operating portion of the height adjustment mechanism 204 in standing position, so as to adjust the installation height of the transport lines. It should be noted that the operating portion of the height adjustment unit 204 may also be provided in the housing.

One of the long sides of each openable/closable door 144 is rotatably attached to the base substrate 143. That is, each openable/closable door 144 is attached to the base substrate 143 so that it can be opened and closed in the vertical direction. When the openable/closable door 144 is opened and closed in the vertical direction, space that is needed to open and close the door can be reduced. It should be noted that the sample transport apparatus 140 has an engaging claw and a lock mechanism (not shown) to keep the openable/closable door 144 closed. Herein, the openable/closable door 144 forms a part of the bottom side face or the bottom of the sample transport apparatus 140.

In this embodiment, wires drawn through the openings, which are provided in the upper-stage shelf board 201 and the lower-stage shelf board 202, are accommodated in the space surrounded by the bottom-stage shelf board 202, the base substrate 143, and the openable/closable doors 144. For example, power lines 205 for the belt driving motor, power lines 206 for the stopper driving motor, and signal lines 207 to 209 are accommodated. It should be noted that the wires accommodated in the space also include wires that just pass through the inside of the sample transport apparatus 140 in the longitudinal direction. At least some of such wires are connected to other apparatuses (e.g., the sample transport apparatus 140, the sample transport apparatus 150 for junction, and the sample inspection apparatus) that are connected to the sample transport apparatus 140.

An operator is able to easily access a wire that is necessary only by opening the openable/closable door 144. In addition, providing the openable/closable door 144 allows some of maintenance to be conducted without removing the housing 141, which results in improved operation efficiency. It is also possible to use an apparatus structure that uses a member detachable from the base substrate 143 and the lower-stage shelf board 202 instead of providing the openable/closable doors 144.

Power units 210 for supplying power to the drive mechanism in the transport line stage on the lower stage side are arranged on the upper face of the lower-stage shelf board 202. In this embodiment, the power units 210 are arranged for the right and left transport lines, respectively. Post members 211 for supporting the upper-stage shelf board 201 are fixed to the opposite ends of the lower-stage shelf board 202 in the long-side direction. In addition, the lower-stage shelf board 202 has fixed thereto fixtures 213 for fixing plates for mounting transport lines (hereinafter referred to as "transport line mounting plates") 212 perpendicularly to the upper face of the lower-stage shelf board 202. Herein, a pair of right and left transport line mounting plates 212 are attached across the short-side width of the upper-stage shelf board 201.

A transport line is arranged on the outer side of the transport line mounting plates 212 (i.e., a side that faces the housing 141). Meanwhile, various drive mechanisms (e.g., a belt driving motor 220 and a stopper driving motor 221) are arranged on the inner side of the transport line mounting plate 212 (i.e., a side that faces the other transport line in the same stage). Herein, the transport line is formed by guide frames 222 that guide the opposite side faces of the sample holder 161 and a transport belt 223 that forms the bottom of the space sandwiched between the guide frames 222. The transport belt 223 is a ring-like member made of resin, rigid rubber, or the like. The guide path of the transport belt 223 is determined by the arrangement of a guide pin 224, which protrudes outward from the transport line mounting plate 212, and a belt drive axis 226. The belt drive axis 226 is integrally attached to the drive axis of the belt driving motor 220. Rotation of the belt drive axis 226 causes the transport belt 223 to move in one direction. With the movement of the transport belt 223 along the guide path, the sample holder 161 that is put on the surface of the transport belt 223 is transported in one direction along the guide frames 222.

As described previously, in this embodiment, wires, drive mechanisms, and the like are disposed in the interior space that is sandwiched between the pair of right and left transport lines. Thus, the distance (e.g., first distance) between the outer side face of each transport line and the housing 141 can be made shorter than the distance (e.g., second distance) between the pair of right and left transport lines. For example, provided that the horizontal width (e.g., short-side length) of the sample transport apparatus 140 is 250 mm, the maximum diameter of the sample holder 161 is 30 mm, and the distance from the guide frame 222 to the adjacent housing 141 is 15 mm, the distance between the pair of right and left transport lines is 160 mm. This satisfies the aforementioned relationship.

The upper-stage shelf board 201 also has fixed thereto fixtures 213 for mounting transport line mounting plates 212 perpendicularly to the upper face of the upper-stage shelf board 201. The structure of the transport line stage on the upper stage side is the same as that of the transport line stage on the lower stage side. That is, transport lines are also arranged on the outer sides of the pair of right and left transport line mounting plates 212 that form the transport line stage on the upper stage side, and a variety of types of drive mechanisms are arranged on the inner side thereof. It should be noted that the upper end portions of the pair of right and left transport line mounting plates 212 are connected with a right -left connecting plate 225. The right-left connecting plate 225 serves the purpose of increasing rigidity by connecting the upper ends of the right and left transport line mounting plates 212, and also serves the purpose of avoiding intrusion of dust or dirt by covering the opening portion formed between the right and left transport line mounting plates 211.

As shown in FIG. 4, in this embodiment, drive mechanisms and wires with relatively high weights can be arranged in an integrated manner around the center of the sample transport apparatus 140 in the short-side direction. Consequently, the center of gravity of each member can be positioned on the inner side than the attachment portions of the legs 145, whereby it becomes possible to prevent the sample transport apparatus 140, which is supported by the legs 145, from falling down easily even when the center of gravity is located at a high level from the floor surface.

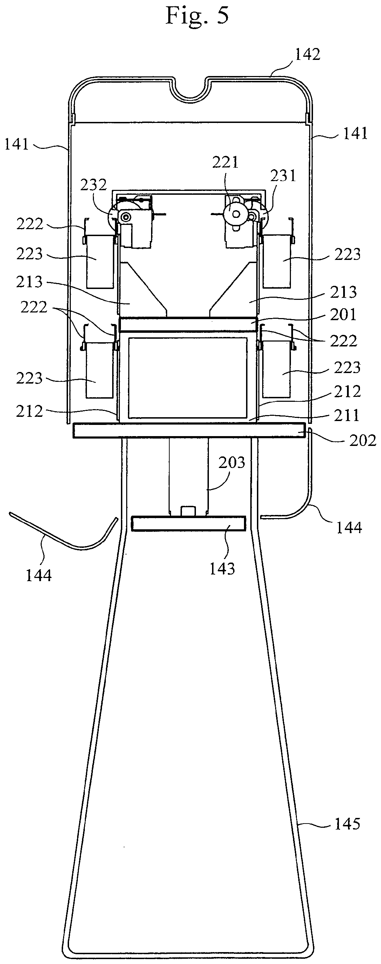

Although this embodiment illustrates an example in which the upper end of each leg 145 is fixed to the base substrate 143 according to the present invention and as shown in FIG. 4, it is also possible to adopt a structure in which each leg 145 is fixed to the lower-stage shelf board 202 as shown in FIG. 5. In the structure of FIG. 5, which is however not an embodiment of the present invention, the openable/closable doors 144 may be attached to the leg 145 in an openable/closable manner, for example. However, in the exemplary structure of FIG. 5, it is impossible to provide a height adjustment mechanism at the height where the height adjustment mechanism can be operated in standing position as the lower-stage shelf board 202 is directly fixed to the openable/closable doors 144.

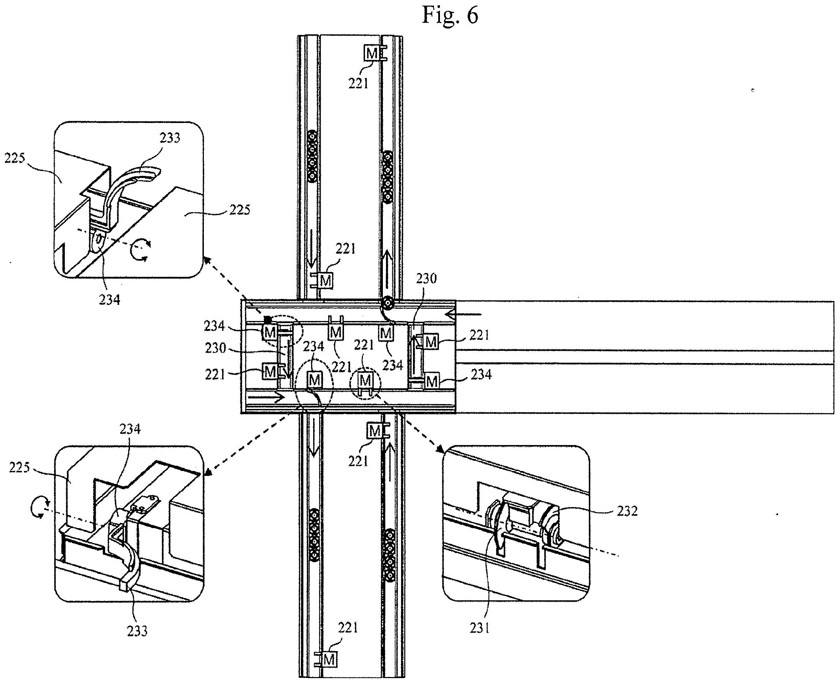

A structure that is specific to the sample transport apparatus 150 for junction will be described with reference to FIG. 6. The basic structure of the sample transport apparatus 150 for junction is similar to the internal structure of the sample transport apparatus 140 without a branch path. That is, in this embodiment, transport lines on the upper stage side are used for transporting samples, while transport lines on the lower stage side are used only for transporting sample holders.

One of the characteristic structures of the sample transport apparatus 150 for junction is that the housing 151 on the long side is provided with openings for connection purposes. In the case of the apparatus for T-shape connection, each of the right and left sides of the housing 151 is provided with an opening, while in the case of the apparatus for L-shape connection, only the connection target side of the housing 151 is provided with an opening. In the opening portion, transfer of the samples 160 and the sample holders 161 is executed between the main transport line of the sample transport apparatus 150 for junction and the main transport line of the connected apparatus.

Another characteristic structure of the sample transport apparatus 150 for junction is that sub-transport lines 230 for forming a loop channel are arranged around opposite ends of the pair of right and left transport lines. The sub-transport lines 230 also include guide frames 222, a transport belt 223 that forms the bottom of the transport lines, a belt driving motor 220, and a stopper driving motor 221 as with the main transport lines.

A stopper mechanism, which is a mechanism common to each of the sample transport apparatus 140 and the sample transport apparatus 150 for junction, is arranged on each transport line. The stopper mechanism includes a stopper driving motor 221 and two stop plates 231 and 232 arranged apart from each other by approximately the diameter of the sample holder 161 in the transport direction. Needless to say, the stopper driving motor 221 is arranged in the space provided between the pair of right and left main transport lines.

Each of the stop plates 231 and 232 has a rotation axis that is parallel with the transport direction, and is rotated about the rotation axis. A cutout is formed in a part of the circumference of each of the stop plates 231 and 232 that are in approximate disk shape. When the cutout is located on the side of the guide frame 222, the sample holder 161 can pass without stopping. Meanwhile, when portions other than the cutout are located on the side of the guide frame 222, the sample holder 161 is stopped by the stop plates that stick out to the inside of the transport line.

The stop mechanism includes the two stop plates 231 and 232 in order to surely separate only one of the plurality of sample holders 161 transported along the transport line. The separation operation is executed in the following procedures. First, the channel is closed with the stop plate on the downstream side, so that the sample holder 161 is stopped. Next, the channel is closed with the stop plate on the upstream side. Accordingly, only one of the sample holders 161 is separated between the two stop plates 231 and 232. After that, only the stop plate on the downstream side is opened to feed only one of the sample holders 161, which has been separated, toward the downstream side. Further, the stop plate on the downstream side is closed and the stop plate on the upstream side is opened, so that a next sample holder 161 is stopped between the two stop plates 231 and 232. After that, the aforementioned operation is repeated.

Another mechanism that is specific to the sample transport apparatus 150 for junction is a direction changing mechanism. The direction changing mechanism includes a direction changing arm 233 and a direction changing arm driving motor 234. The direction changing mechanism is arranged at an intersection of two transport lines with different transport directions. It should be noted that the direction changing mechanism is arranged at a portion that switches between discharge to a transport line of another apparatus connected to the sample transport apparatus 150 for junction and transport within the sample transport apparatus 150 for junction. In addition, the direction changing mechanism is arranged at a portion that switches between transport on a main transport line and transport on a sub-transport line.

A movable end (i.e., end portion) of the direction changing arm 233 has a curved shape. In this embodiment, the rotation axis of the direction changing arm driving motor 234 is mounted in parallel with the main transport line. The direction changing arm 233 allows switching of the transport direction of the sample 160 that moves on the main transport line.

It should be noted that in this embodiment, an RFID (Radio Frequency IDentification) (not shown) is arranged at the bottom of the sample holder 161. A sensor (not shown) is arranged on the upstream side of the direction changing arm 233 in the transport direction so that information on the RFID is read by the sensor. The read information on the RFID is processed by a processor (not shown) so that a direction in which the individual sample holder 161 should be transported is determined. The processor, on the basis of the determination result, controls the drive of the direction changing arm driving motor 234 and transports the sample holder 161 in an appropriate direction.

It should be noted that in order to allow the sample holder 161 to be transferred between the sample transport apparatus 150 for junction and an apparatus connected to the long-side side face of the sample transport apparatus 150 for junction, the shortest distance between the main transport line in the sample transport apparatus 150 for junction and the housing 141 is designed to be within a half the maximum diameter of the transported sample holder 161. For example, when the maximum diameter of the sample holder 161 is 30 mm, the distance between the guide frame 222 and the housing 141 is set to less than or equal to 15 mm.

### [Conclusion]

As described above, in this embodiment, the distance (i.e., second distance) between a pair of right and left main transport lines is formed wider than the distance (i.e., first distance) between each main transport line and the housing 141. Therefore, a compact sample transport apparatus, which has a drive mechanism, a power supply unit, wires, and the like arranged in the space formed between a pair of right and left main transport lines, can be implemented. In addition, according to such a structure, the center of gravity of the sample transport apparatus can be positioned around the center of the short-side direction. Thus, the sample transport apparatus will less easily fall down even when the position of the center of gravity of the apparatus is at a high level.

In this embodiment, a wire accommodating portion that integrally accommodates a variety of wires is provided on a further lower-stage side than the transport line stages. Thus, approach to wires in the maintenance operation becomes easier. Further, in this embodiment, the openable/closable doors 144 that allow access to the wire accommodating portion from the outside are provided below the housing 141. Thus, it is possible to eliminate the necessity to remove all housing component parts each time maintenance is performed. That is, when just maintenance of wires is performed, it is not necessary to remove the housing to access the wires. Thus, the operation time can be reduced by that amount. It should be noted that the openable/closable doors 144 in this embodiment form a part of the lower side wall or the bottom face of the housing 141 and open in the vertical direction. Thus, space that is needed to open the doors can be reduced.

In addition, in this embodiment, as multiple stages of transport lines are arranged in the housing 144, a number of samples 160 and/or sample holders 161 can be transported at a time. Further, when a transport line stage on which sample holders 161 holding samples 160 are transported is separated from a transport line stage on which empty sample holders 161 not holding the samples 160 are transported, it is possible to set the distance of the space in the height direction, which is needed between the transport line stage on which the empty sample holders 161 are transported and the transport line stage on the upper stage side, to be within the height of the sample holder 161. Consequently, the size of the sample transport apparatus 140 and the sample transport apparatus 150 for junction can be reduced in the height direction.

Furthermore, in this embodiment, the opening at the top of the housing 141 is covered with the transport line covers 142 and 152 in a detachable manner. Thus, transport lines can be easily accessed during maintenance, which results in increased efficiency of the maintenance operation. In addition, in the sample transport apparatus 140 in which the base substrate 143 is supported by the legs 145, the height adjustment mechanism 204 is provided at the attachment portion between the base substrate 143 and the legs 145. Thus, an operator is able to finely adjust the height of the transport lines in standing position.

### [Other Embodiments]

It should be noted that the present invention is not limited to the structures of the aforementioned embodiments, and includes a variety of variations, within the scope of the appended claims.

### DESCRIPTION OF SYMBOLS

- 140: Sample transport apparatus
- 141: Housing
- 142: Transport line cover
- 143: Base substrate
- 144: Openable/closable door
- 145: Leg
- 150: Sample transport apparatus for junction
- 151: Housing
- 152: Transport line cover
- 153: Height adjustment leg
- 160: Sample
- 161: Sample holder
- 201: Upper-stage shelf board
- 202: Lower-stage shelf board
- 203: Post
- 204: Height adjustment mechanism
- 205: Power line for the belt driving motor
- 206: Power line for the stopper driving motor
- 207, 208, 209: Signal line
- 210: Power supply portion
- 211: Post member
- 212: Transport line mounting plate
- 213: Fixture
- 220: Belt driving motor
- 221: Stopper driving motor
- 222: Guide frame
- 223: Transport belt
- 224: Guide pin
- 225: Right-left connecting plates
- 226: Belt drive axis
- 230: Sub-transport line
- 231, 232: Stop plates
- 233: Direction changing arm
- 234: Direction changing arm driving motor

## Claims

1. A sample transport apparatus comprising:
a housing (141);
at least an upper transport line stage accommodated in the housing and including left and right transport lines, each of the left and right transport lines being configured to transport sample holders (161) each capable of holding at least one sample (160) along a side wall of the housing along a long-side direction;
a drive mechanism (220) accommodated in the housing, the drive mechanism being configured to transport the sample holders along the left and right transport lines;
wires (205 to 209) accommodated in the housing and connected to at least the drive mechanism,
wherein the left transport line and the right transport line of the upper transport line stage are arranged in parallel along a long-side side face of the housing;
wherein a first distance between the left transport line and the long-side side face that is adjacent the left transport line is shorter than a second distance between the left transport line and the right transport line; and
wherein the housing is supported by a base substrate (143);
**characterized in that**
the sample transport apparatus further comprises a lower transport line stage accommodated in the housing below the upper transport line stage and adapted to transport sample holders not holding any samples;
a leg (145) that supports the base substrate; and
a height adjustment mechanism (204) provided at an attachment portion between the base substrate and posts (203) supporting the lower transport line stage, the height adjustment mechanism being configured to adjust the installation height of the transport lines;
wherein a wire accommodating portion is provided in a space below the lower transport line stage, the wire accommodating portion accommodating the wires extracted from a space formed between the left transport line and the right transport line; and
wherein the housing has an openable/closable door (144) for exposing the wire accommodating portion to the outside, wherein the openable/closable door forms the long-side side face together with the housing, and is rotatably attached to the base substrate such as to open or close in a vertical direction.

2. The sample transport apparatus according to claim 1, further comprising
a transport line cover (142) for detachably covering an opening portion at a top of the housing (141).

## Patentansprüche

1. Probentransportvorrichtung, umfassend:
ein Gehäuse (141);
mindestens eine obere Transportlinienebene, die im Gehäuse aufgenommen ist und linke und rechte Transportlinien enthält, wobei jede der linken und rechten Transportlinien dazu eingerichtet ist, Probenhalterungen (161), die mindestens eine Probe (160) halten können, entlang einer Seitenwand des Gehäuses in einer Längsrichtung zu transportieren;
einen Antriebsmechanismus (220), der im Gehäuse aufgenommen ist und dazu eingerichtet ist, die Probenhalterungen entlang der linken und rechten Transportlinien zu transportieren;
Drähte (205 bis 209), die im Gehäuse aufgenommen sind und zumindest mit dem Antriebsmechanismus verbunden sind,
wobei die linke Transportlinie und die rechte Transportlinie der oberen Transportlinienebene parallel entlang einer Längsseitenfläche des Gehäuses angeordnet sind;
wobei ein erster Abstand zwischen der linken Transportlinie und der Längsseitenfläche, die der linken Transportlinie benachbart ist, kürzer ist als ein zweiter Abstand zwischen der linken Transportlinie und der rechten Transportlinie; und
wobei das Gehäuse von einem Basissubstrat (143) getragen wird;
**gekennzeichnet**
**dadurch, dass** die Probentransportvorrichtung ferner eine untere Transportlinienebene umfasst, die im Gehäuse unterhalb der oberen Transportlinienebene aufgenommen ist und dazu ausgelegt ist, Probenhalterungen, die keine Proben halten, zu transportieren;
durch ein Bein (145), das das Basissubstrat trägt, und
einen Höhenjustierungsmechanismus (204), der an einem Anbringungsabschnitt zwischen dem Basissubstrat und Pfosten (203), die die untere Transportlinienebene tragen, vorgesehen ist, wobei der Höhenjustierungsmechanismus dazu eingerichtet ist, die Installationshöhe der Transportlinien zu justieren;
wobei ein Drahtaufnahmeabschnitt in einem Raum unterhalb der unteren Transportlinienebene vorgesehen ist, wobei der Drahtaufnahmeabschnitt die Drähte aufnimmt, die aus einem zwischen der linken Transportlinie und der rechten Transportlinie gebildeten Raum ausgezogen sind, und
wobei das Gehäuse eine Tür (144), die geöffnet und geschlossen werden kann, zum Freilegen des Drahtaufnahmeabschnitts nach außen aufweist, wobei die Tür, die geöffnet und geschlossen werden kann, die Längsseitenfläche zusammen mit dem Gehäuse bildet und rotierbar am Basissubstrat angebracht ist, um so in einer vertikalen Richtung geöffnet oder geschlossen zu werden.

2. Probentransportvorrichtung nach Anspruch 1, ferner umfassend
eine Transportlinienabdeckung (142) zum entfernbaren Abdecken eines Öffnungsabschnitts auf einer Oberseite des Gehäuses (141).

## Revendications

1. Appareil de transport d'échantillons comprenant :
un logement (141) ;
au moins un étage supérieur de ligne de transport reçu dans le logement et incluant des lignes de transport gauche et droite, chacune des lignes de transport gauche et droite étant configurée pour transporter des porte-échantillons (161) aptes chacun à contenir au moins un échantillon (160) le long d'une paroi latérale du logement le long d'un sens de côté long ;
un mécanisme d'entraînement (220) reçu dans le logement, le mécanisme d'entraînement étant configuré pour transporter les porte-échantillons le long des lignes de transport gauche et droite ;
des fils (205 à 209) reçus dans le logement et connectés à au moins le mécanisme d'entraînement,
dans lequel la ligne de transport gauche et la ligne de transport droite de l'étage supérieur de ligne de transport sont agencées en parallèle le long d'une face latérale de côté long du logement ;
dans lequel une première distance entre la ligne de transport gauche et la face latérale de côté long qui est adjacente à la ligne de transport gauche est plus courte qu'une deuxième distance entre la ligne de transport gauche et la ligne de transport droite ; et
dans lequel le logement est supporté par un substrat de base (143) ;
**caractérisé en ce que**
l'appareil de transport d'échantillons comprend en outre un étage inférieur de ligne de transport reçu dans le logement en-dessous de l'étage supérieur de ligne de transport et adapté à transporter des porte-échantillons ne contenant pas d'échantillons ;
un pied (145) qui supporte le substrat de base ; et
un mécanisme d'ajustement de hauteur (204) prévu au niveau d'une partie de fixation entre le substrat de base et des montants (203) supportant l'étage inférieur de ligne de transport, le mécanisme d'ajustement de hauteur étant configuré pour ajuster la hauteur d'installation des lignes de transport ;
dans lequel une partie de réception de fils est prévue dans un espace en-dessous de l'étage inférieur de ligne de transport, la partie de réception de fils recevant les fils extraits d'un espace formé entre la ligne de transport gauche et la ligne de transport droite ; et
dans lequel le logement a une porte ouvrable/fermable (144) pour exposer la partie de réception de fils à l'extérieur, dans lequel la porte ouvrable/fermable forme la face latérale de côté long ensemble avec le logement, et est fixée rotative au substrat de base de manière à s'ouvrir ou se fermer dans le sens vertical.

2. Appareil de transport d'échantillons selon la revendication 1, comprenant en outre
un capot (142) de lignes de transport pour recouvrir de façon détachable une partie d'ouverture au niveau d'un sommet du logement (141).
